(19) Europäisches Patentamt

European Patent Office

Office européen des brevets

(11) Veröffentlichungsnummer: **0 621 292 A2**

(12) **EUROPÄISCHE PATENTANMELDUNG**

(21) Anmeldenummer: **94106026.1**

(22) Anmeldetag: **19.04.94**

(30) Priorität: **22.04.93 DE 4313087**

(43) Veröffentlichungstag der Anmeldung:
**26.10.94 Patentblatt 94/43**

(84) Benannte Vertragsstaaten:
**BE DE ES FR GB IT NL**

(51) Int. Cl.⁵: **C08F 291/02**

(71) Anmelder: **BASF Aktiengesellschaft**
**Carl-Bosch-Strasse 38**
**D-67063 Ludwigshafen (DE)**

(72) Erfinder: **Niessner, Norbert, Dr.**
**Buhl'scher Hof 10**
**D-67159 Friedelsheim (DE)**
Erfinder: **Seitz, Friedrich, Dr.**
**Von-Wieser-Strasse 1**
**D-67159 Friedelsheim (DE)**
Erfinder: **Fischer, Wolfgang, Dr.**
**Lindenberger Strasse 4**
**D-67067 Ludwigshafen (DE)**
Erfinder: **Tiefensee, Kristin, Dr.**
**Beethovenstrasse 1**
**D-67368 Westheim (DE)**

(54) **Teilchenförmiges Pfropfpolymerisat und hieraus erhaltene thermoplastische Formmasse.**

㊼ Unmittelbarer Erfindungsgegenstand ist ein Verfahren zur Herstellung kautschukelastischer teilchenförmiger Pfropfpolymerisate durch Polymerisation eines oder mehrerer Monomerer in Gegenwart eines vorgebildeten pfropfbaren kautschukelastischen Polymeren (Pfropfgrundlage oder Pfropfkern) unter Ausbildung einer Pfropfhülle, das als Polymerisationsauslöser ein Redoxsystem aus Alkalipersulfat, einem zweiwertigen Eisensalz und Alkali-formaldehydsulfoxylat verwendet.

EP 0 621 292 A2

Die Erfindung betrifft kautschukelastische teilchenförmige Pfropfpolymerisate, die dazu dienen sollen, spröden thermoplastischen Kunststoffen Zähigkeit gegen Schlagbeanspruchung zu verleihen, sowie daraus hergestellte thermoplastische Formmassen mit verbesserter Zähigkeit.

Die Herstellung teilchenförmiger Pfropfpolymerisate aus einem kautschukelastischen Kern, d.h. einem Polymeren mit einer Glasübergangstemperatur von unter 0°C, und einer Pfropfhülle, z.B. durch Emulsionspolymerisation, ist bekannt. Hierzu wird zunächst durch Emulsionspolymerisation geeigneter Monomerer eine Pfropfgrundlage hergestellt. Die Monomeren, die die Pfropfhülle bilden sollen, werden dann in Gegenwart der Pfropfgrundlage so polymerisiert, daß ein möglichst hoher steil auf die Pfropfgrundlage aufgepfropft wird. Die teilchenförmigen Pfropfpolymerisate werden dann, wie angegeben, zur Verbesserung der Schlagzähigkeit an sich spröder, schlagempfindlicher Thermoplaste verwendet. Dabei werden die Monomeren für die Pfropfhülle so gewählt, daß die Pfropfhülle mit dem zu modifizierenden Thermoplasten verträglich ist. Die Herstellung solcher Schlagzähmodifier ist seit langem bekannt und z.B. in der US-PS 3 055 859 und der DE-PS 12 60 135 beschrieben.

Ein Hauptproblem bei der Herstellung solcher teilchenförmiger Pfropfpolymerisate ist die Anbindung der Pfropfhülle an die Pfropfgrundlage. Bei schlechter Anbindung ist die schlagzähmodifizierende Wirkung nicht ausreichend, so daß nur Produkte mit unzureichender Zähigkeit erhalten werden können.

Zur Verbesserung der Anbindung wurden ganz verschiedenartige Maßnahmen vorgeschlagen: EP 0 450 511 beschreibt eine Verbesserung der Anbindung, wenn als Pfropfgrundlage ein Polymerisat verwendet wird, das saure Gruppen enthaltende Monomere einpolymerisiert enthält und auf das als Pfropfhülle basische Gruppen enthaltende Monomere aufgepfropft sind. Daraus hergestellte thermoplastische Formmassen haben eine matte Oberfläche. Als weitere Möglichkeit wird in EP 0 445 601 der Einsatz von Hydroxyalkylacrylat oder -methacrylat in der Pfropfgrundlage beschrieben, wobei jedoch keine matten Produkte erhalten werden.

Eine vor allem für die Anbindung von Pfropfhüllen an Pfropfgrundlagen vom Typ der Acrylatkautschuke gedachte Technik sieht die Verwendung sog. pfropfaktiver Monomerer und die Vermehrung der Pfropfstellen des Kautschuks durch Einbau von z.B. Hydroperoxy-Gruppen vor. Dies soll einerseits durch Verwendung von Sauerstoff als Radikalbildner, andererseits durch den Einsatz von sog. Redox-Systemen bei der radikalischen Polymerisationsauslösung möglich sein.

Für die Pfropfung mit Styrol und Acrylnitril (zur Herstellung von sog. ASA-Polymeren) sind z.B. die folgenden Druckschriften in Betracht zu ziehen:

EP 89 086; 83 946; 76 162; 51 875; 186 926; 158 347; 108 350; 106 293;

US 4 764 563; CA 1 149 984.

Ein mehrfach erwähntes Redox-System ist dabei ein Gemisch aus Cumolhydroperoxid, Eisen(II)salzen und Na-formaldehyd-sulfoxylat.

Da speziell Cumolhydroperoxid verschiedene schwere Mängel hat und als besonders gefährlicher Stoff gilt, besteht die Aufgabe, ein Redox-System für die Polymerisation bzw. Pfropfung von Styrol und Acrylnitril auf Acrylatkautschuk zu finden, das eine gute Anbindung der Pfropfhülle an den Kautschuk bewirkt und keine stofflichen Nachteile hat.

Es wurde gefunden, daß ein Redoxsystem aus Alkalipersulfat (Alkaliperoxodisulfat),einem Eisen (II) salz und Alkaliformaldehyd-sulfoxylat, vorteilhaft zusammen mit einem Komplexbildner zu einer besonders guten Anbindung der Pfropfhülle an den Kautschuk Pfropfkern führt.

Unmittelbarer Erfindungsgegenstand ist ein Verfahren zur Herstellung kautschukelastischer teilchenförmiger Pfropfpolymerisate durch Polymerisation eines oder mehrerer Monomerer in Gegenwart eines vorgebildeten pfropfbaren kautschukelastischen Polymeren (Pfropfgrundlage oder Pfropfkern) unter Ausbildung einer Pfropfhülle, das als Polymerisationsauslöser ein Redoxsystem aus Alkalipersulfat, einem zweiwertigen Eisensalz und Alkali-formaldehydsulfoxylat verwendet.

Als Persulfat wird bevorzugt Natrium-, Ammonium- oder Kaliumpersulfat, besonders bevorzugt Kaliumpersulfat (oder auch Kaliumperoxodisulfat genannt, $K_2S_2O_8$), verwendet.

Als Eisen(II)-Salze werden bevorzugt solche Salze verwendet, die in ihrer dissoziierten wäßrigen Lösung nur wenig basisch und wenig sauer reagieren.

Bevorzugt wird Eisen(II)sulfat (ggf. eingesetzt als Eisen(II)sulfatheptahydrat, $FeSO_4$) verwendet.

Prinzipiell ist es auch möglich, Eisen(III)salze einzusetzen, da Formaldehydsulfoxylat die Überführung in die Oxidationsstufe II bewirkt.

Weiterhin wird als reduzierendes Mittel eben ein Alkalisalz der Hydroxymethansulfinsäure (Kalium-, Ammonium- oder Natriumformaldehydsulfoxylat, bevorzugt Natriumformaldehydsulfoxylat $CH_3NaO_3S$, ggf. als Dihydrat) eingesetzt. Das letztere ist ein überall erhältliches Handelsprodukt (z.B. Rongalit® C, Handelsbezeichnung der BASF Aktiengesellschaft).

2

Der als Pfropfgrundlage dienende Kautschuk wird bevorzugt durch Emulsionspolymerisation geeigneter Monomerer erhalten. Geeignete Monomere können in Emulsion durch Radikalstarter polymerisiert werden, bevorzugt wird ebenfalls das erfindungsgemäße Redoxsystem eingesetzt. Geeignete Monomere sind bevorzugt Acrylate, besonders bevorzugt Alkylacrylate mit bis zu 8 C-Atomen im Alkylrest, insbesondere n-Butylacrylat und Ethylhexylacrylat. Auch Mischungen der genannten Monomeren sowie Copolymerisate mit bis zu 50 Gew.-% weiterer, ethylenisch ungesättigter Monomerer wie Styrol und seiner alkylsubstituierten Derivate wie alpha-Methylstyrol, p-Methylstyrol, sowie Alkylmethacrylate wie Methylmethacrylat, Ethylmethacrylat, (Meth)acrylsäure, (Meth)acrylnitril können verwendet werden.

Bevorzugt sind die genannten Acrylat-Emulsionskautschuke vernetzt. Als Vernetzer dienen 0,1 bis 5-Gew.-%, bevorzugt 0,2 bis 4 Gew.-% polyfunktionelle, ethylenisch ungesättigte Monomere. Beispiele sind Divinylbenzol, Diallylmaleat, Diallylfumarat, Diallylphthalat, Allyl(meth)acrylat, Triallyl(iso)cyanurat. Als besonders günstiges Vernetzungsmonomeres hat sich der Acrylsäureester des Tricyclodecenylalkohols erwiesen (vgl. DE 12 60 135).

Die Herstellung der Pfropfgrundlage durch Emulsionspolymerisation ist bekannt und z.B. beschrieben in der DE 12 60 135. Hierzu wird das oder die Monomeren in wäßriger Emulsion bei 0 bis 100°C, bevorzugt 20 bis 80°C, besonders bevorzugt bei 40 bis 60°C, polymerisiert. Es können die üblichen Emulgatoren wie die Alkalisalze von Alkyl- oder Alkylarylsulfonsäure, Alkylsulfate, Fettalkoholsulfonate, Salze höherer Fettsäuren mit 10 bis 30 C-Atomen oder Harzseifen verwendet werden. In einer bevorzugten Ausführungsform können noch bis zu 100 Gew.-%, bezogen auf die Menge des Emulgators, an Polyalkylenoxiden, wie z.B. Polyethylenoxid oder Polypropylenoxid, hinzugemischt werden, was die Stabilität der Emulsion erhöht. Es ist günstig, den Emulgator in einer Menge von 0,3 bis 5 Gew.-%, bevorzugt von 0,5 bis 2 Gew.-%, bezogen auf das Gesamtgewicht der bei der Herstellung der Pfropfgrundlage verwendeten Monomeren, einzusetzen. Im allgemeinen wird bei einem Wasser/Monomer-Verhältnis von 2:1 bis 0,7:1 gearbeitet. Als Polymerisationsinitiatoren dienen bevorzugt die gebräuchlichen Persulfate, wie z.B. Kaliumperoxodisulfat (KPS). In einer besonders bevorzugten Ausführungsform kann ein Redoxsystem, bestehend aus Persulfat/Rongalit/Eisen(II)salz im Verhältnis 1-10/0,5-10/0,01-1, bevorzugt 8/1-6/0,02-0,1, bezogen auf 1600 g Feststoffgehalt der zu polymerisierenden Acrylatdispersion, eingesetzt werden.

Als Polymerisationshilfsstoffe können die üblichen Puffersubstanzen, durch welche ein pH-Wert von 5 bis 9 eingestellt wird, z.B. Natrium(bi)carbonat, Natriumpyrophosphat, sowie bis zu 3 Gew.-% eines Molekulargewichtsreglers, z.B. Mercaptan, Terpinol oder dimeres alpha-Methylstyrol, verwendet werden.

Prinzipiell ist es auch möglich, die Pfropfgrundlage nach einem anderen Verfahren als dem der Emulsionspolymerisation herzustellen, so z.B. durch Masse- oder Lösungspolymerisation, und die erhaltenen Polymerisate nachträglich zu emulgieren. Geeignete Verfahren sind bekannt.

Die mittlere Teilchengröße der Pfropfgrundlage beträgt 30 bis 1000, bevorzugt 50 bis 700 nm.

Im nächsten Schritt, der Pfropfung, läßt man ein Monomerengemisch in Gegenwart des Redoxsystems aus Eisen(II)-Salz/Persulfat/Sulfoxylat zur Pfropfgrundlage zulaufen. Die Mitverwendung eines Komplexbildners wie Ethylendiamintetraessigsäure ist empfehlenswert. Die Pfropfung erfolgt im wesentlichen bei den gleichen Temperaturen wie die Polymerisation der Grundstufe, also bei 0 bis 100°C, bevorzugt 20 bis 80°C, insbesondere 40 bis 60°C.

Die aufzupfropfenden Monomeren können gemeinsam mit der zu pfropfenden Kautschukgrundlage vorgelegt und gemeinsam mit dem Redoxsystem aus Persulfat/Rongalit/Eisen(II)salz oder mit einzelnen Komponenten dieses Redoxsystems polymerisiert werden, wobei dann die übrigen Komponenten des Redoxsystems im Verlauf der Polymerisation zugegeben werden.

In einer bevorzugten Ausführungsform wird ggf. ein kleiner Teil der zu pfropfenden Monomeren zur wäßrigen Dispersion der kautschukartigen Pfropfgrundlage zugegeben und anschließend der Rest (der größte Teil) der Monomeren im Zulaufverfahren in einem Zeitraum von bevorzugt 1 bis 10 Stunden zugetropft. Dabei kann das Redoxsystem entweder komplett zur Pfropfgrundlage vorgelegt werden, oder nur Teile davon. Bevorzugte Ausführungsformen:

a) Pfropfgrundlage in Wasser, Eisen(II)salz, Komplexbildner werden vorgelegt, auf die Reaktionstemperatur erwärmt, der Initiator (Persulfat) dazugegeben (wobei der Initiator genausogut vorgelegt werden kann) und die Monomeren, gemeinsam mit Rongalit C zugesetzt.

b) Wie a), jedoch wird hier der Initiator (Persulfat) mit den Monomeren zugesetzt.

Das eingesetzte Monomerengemisch wird so gewählt, daß das Pfropfpolymerisat mit dem zu modifizierenden Thermoplasten verträglich ist. Das zur Herstellung der Pfropfhülle verwendete Monomerengemisch enthält im allgemeinen keine vernetzenden Monomeren. Bevorzugte Monomere sind vinylaromatische Monomere, wie z.B. Styrol, alpha-Methylstyrol oder p-Methylstyrol, Alkylacrylate und -methacrylate mit 1 bis 4 C-Atomen im Alkylrest wie z.B. Butylacrylat, Methylmethacrylat, Ethylhexylacrylat, Acrylnitril oder Methacrylnitril. Ebenfalls geeignet sind Maleinsäure und deren -imide, wie z.B. N-Phenylmaleinimid, aber auch Anhydride wie z.B. Maleinsäureanhydrid. Die aufzupfropfenden Monomeren werden in einer solchen Menge verwendet, daß ihr Anteil am gesamten Pfropfcopolymerisat 10 bis 50 Gew.-%, bevorzugt 20 bis 40 Gew.-% beträgt.

In einer besonders bevorzugten Ausführungsform dient das erfindungsgemäße Verfahren zur Herstellung teilchenförmiger Pfropfcopolymerisate zur Schlagzähmodifizierung von Styrol/Acrylnitril-Copolymerenoder Methylmethacrylat-Polymeren. In diesem Fall wird man für die Herstellung der Pfropfhülle ein Monomerengemisch aus Styrol und Acrylnitril, bzw. Methylmethacrylat wählen, ggf. mit Anteilen an weiteren Comonomeren.

In einer besonderen Ausführungsform dient das erfindungsgemäße Redoxsystem aus Persulfat/Sulfoxylat/Eisen(II)salz zur Entmonomerisierung wäßriger Monomer-Lösungen oder Dispersionen. Beispielhaft sei dabei die Entmonomerisierung einer wäßrigen Acrylnitril- oder Styrol-Lösung (wobei Acrylnitril wesentlich wasserlöslicher ist als Styrol) bzw. einer Dispersion dieser Monomeren genannt. Um die bei der Entmonomerisierung entstehenden Polymeren nicht "ausklumpen" zu lassen, d.h. zur Vermeidung von Koagulat, ist es von Vorteil, wenn vor, während oder nach dem Entmonomerisierungsvorgang Seife bzw. Emulgator zugesetzt wird. Diese Emulgatoren können, müssen aber nicht, mit den oben beschriebenen identisch sein. Die eingesetzten Mengen betragen: Persulfat/Sulfoxylat/Eisen(II)salze im Verhältnis 1-10/0,5-10/0,1-1, bevorzugt 2-8/1-6/0,02-0,1, bezogen auf 1600 g nicht polymerisierte Monomere.

Die nach dem erfindungsgemäßen Verfahren hergestellten Formmassen können als weitere Komponenten Zusatzstoffe enthalten, wie sie für thermoplastische Formmassen üblich sind. Als solche seien beispielsweise genannt: Füllstoffe, weitere verträgliche Kunststoffe, Antistatika, Antioxidantien, Flammschutzmittel, Schmiermittel, Entformungshilfsmittel, Farbstoffe und Pigmente. Die Zusatzstoffe werden in den üblichen Mengen, vorzugsweise in Mengen von 0,1 bis 30 Gew.-%, bezogen auf das Gesamtgewicht der thermoplastischen Formmasse, eingesetzt.

Die erfindungsgemäßen Massen lassen sich nach den für die Thermoplastverarbeitung üblichen Verfahren, wie z.B. Extrusion und Spritzgießen, zu den verschiedenartigsten Formkörpern, wie z.B. Fensterprofilen, Gartenmöbeln, Booten, Schildern, Lampenabdeckungen, Automobilteilen und Kinderspielzeug verarbeiten. Die erfindungsgemäßen Massen eignen sich besonders zur Herstellung von Formkörpern, bei denen eine hohe Schlagzähigkeit gefordert ist.

Beispiele

Verwendete Materialien

Natriumformaldehydsulforylat-dihydrat (Rongalit® C, Handelsprodukt der BASF Aktiengesellschaft)
Eisen(II)sulfat-heptahydrat
Cumolhydroperoxid (als 80 %ige Lösung - zu Vergleichszwecken)
Tert.-Butylhydroperoxid (als 80 %ige Lösung - zu Vergleichszwecken)
Kaliumperoxodisulfat ("KPS")
Ethylendiamintetraessigsäure-tetranatriumsalz (EDTA-Na; Trilon® B, Handelsprodukt der BASF Aktiengesellschaft) Isoserindiessigsäure (ISDA; Trilon® ES, Handelsprodukt der BASF Aktiengesellschaft)

Komponente A:

16 kg n-Butylacrylat und 0,4 kg Tricyclodecenylacrylat wurden in 150 kg Wasser unter Zusatz von 0,5 kg des Natriumsalzes einer $C_{12}$-$C_{18}$-Paraffinsulfonsäure, 0,3 g Kaliumperoxodisulfat, 0,3 kg Natriumhydrogencarbonat und 0,15 kg Natriumpyrophosphat unter Rühren auf 60°C erwärmt. 10 Minuten nach dem Anspringen der Polymerisationsreaktion wurde innerhalb von 3 Stunden eine Mischung aus 82 kg n-Butylacrylat und 1,6 kg Tricyclodecenylacrylat zugegeben. Nach Beendigung der Monomerzugabe wurde die Emulsion noch eine Stunde bei 60°C gehalten. Die erhaltene Emulsion des vernetzten Butylacrylat-Polymerisats hatte einen Feststoffgehalt von 40 %.

Die Pfropfung erfolgte wie nachstehend unter Tabelle 1 bis 5 beschrieben.

Gelgehalt: Die Pfropfpolymerisate werden 1 Tage bei Raumtemperatur in tert.-Butylmethylether gequollen, der lösliche Teile separiert. Der unlösliche Teil im Verhältnis zur Einwaage ergibt den Gelgehalt, der bei ansonsten gleichen Polymerisationsbedingungen die Güte der Pfropfhüllenanbindung an den vernetzten Acrylat-Grundkautschuk widerspiegelt.

4

Aufarbeitung

Die Pfropfkautschuke werden anschließend im Gew.-Verhältnis 1:1 mit einem Polystyrol-acrylnitril-Copolymerisat, enthaltend 35 Gew.-% Acrylnitril-Monomereinheiten (Viskositätszahl 80 ml/g, bestimmt an einer 0,5 %igen Lösung in Dimethylformamid bei 23°C) auf einem Zweiwellenextruder Marke ZSK 30 der Fa. Werner und Pfleiderer bei 250°C vermischt, zu einem Strang extrudiert und granuliert. Daraus werden bei den angegebenen Spritzgußtemperaturen Formkörper für die nachstehenden Prüfungen gespritzt.

Prüfungen

$a_k$:    Kerbschlagzähigkeit (Spritzgußtemperatur in °C/Prüftemperatur in °C). Einheit: kJ/M² (DIN 53 460)

FRT:    Fallrohrtest (Spritzgußtemperatur/Prüftemperatur = 280/23). Einheit: Nm (DIN 53 443).

1. Einfluß des Peroxids

Es wurden tert.-Butylhydroperoxid (t-BuOOH), Cumolhydroperoxid (CHP) und Kaliumperoxodisulfat (KPS) in jeweils gleichen molaren Mengen (12 mmol) zwecks korrekten Vergleichs eingesetzt.

Tabelle 1: Einfluß des Peroxids

Rezeptur: 4050 g Komponente A (40 %ig = 1620 g fest), 2300 g Wasser, 0,07 g Eisen(II)sulfatheptahydrat, 0,45 g EDTA-Na werden auf Temperatur T erwärmt. Danach wird der Initiator zugegeben und nach 5 Minuten Zulauf 1, bestehend aus 810 g Styrol und 270 g Acrylnitril, gemeinsam mit Zulauf 2, bestehend aus 2,3 g Sulfoxylat in 100 ml Wasser, innerhalb von 3 Stunden zugetropft. 2 Std. Nachreaktionszeit.

| Versuch Nr. | T [°C] | Initiator | Gel-Gehalt [%] | $a_{k,220/23}$ [kJ/m²] | $a_{k,280/23}$ [kJ/m²] | FRT [Nm] |
|---|---|---|---|---|---|---|
| Bsp. 1 | 45 | KPS | 97,5 | 22 | 33 | 31 |
| Bsp. 2 | 65 | KPS | 98.1 | 27 | 32 | 35 |
| Vergl. 1 | 45 | t-BuOOH | 95,7 | 21 | 30 | 27 |
| Vergl. 2 | 45 | CHP | 94,2 | 15 | 22 | 28 |
| Vergl. 3 | 65 | t-BuOOH | 95,0 | 25 | 28 | 32 |
| Vergl. 4 | 65 | CHP | 95,2 | 25 | 28 | 31 |

Der Einfluß der Menge an KPS wird in folgender Tabelle deutlich.

Tabelle 2: Einfluß der KPS-Menge

Rezeptur: 4050 g Komponente A (40 %igen = 1620 g fest), 2300 g Wasser, 0,07 g Eisen(II)sulfatheptahydrat, 0,45 g EDTA-Na werden auf 45°C erwärmt. Danach wird KPS zugegeben und nach 5 Minuten Zulauf 1, bestehend aus 810 g Styrol und 270 g Acrylnitril, gemeinsam mit Zulauf 2, bestehend aus 2,3 g Sulfoxylat in 100 ml Wasser, innerhalb von 3 Stunden zugetropft. 2 Std. Nachreaktionszeit.

| Versuch Nr. | T [°C] | KPS [g] | Gel-Gehalt [%] | $a_{k,220/23}$ [kJ/m²] | $a_{k,280/23}$ [kJ/m²] | FRT [Nm] |
|---|---|---|---|---|---|---|
| 1 | 45 | 7,2 | 97,9 | 7 | 19 | 40 |
| 2 | 45 | 3,6 | 98,0 | 8 | 21 | 45 |
| 3 | 45 | 1,8 | 96,7 | 10 | 21 | 44 |
| 4 | 45 | 0,9 | 96,5 | 11 | 21 | 46 |

2. Einfluß des Eisensalzes und des Komplexbildners

Da erhöhte Eisengehalte zu unerwünschten Begleiterscheinungen wie Korrosivität im Emulsions-Stahlkessel und Vergilbung führen, sollte man bestrebt sein, den Eisen-Gehalt möglichst niedrig zu halten. In der folgenden Tabelle wird der für eine gute Produktqualität notwendige Eisengehalt optimiert. Simultan mit der Menge an Eisensalz wurde auch die Menge an Komplexbildner reduziert.

Tabelle 3: Einfluß der Menge des Eisensalzes

Rezeptur: 4050 g Komponente A (40 %ig = 1620 g fest), 2300 g Wasser, Eisen(II)sulfatheptahydrat und EDTA-Na werden auf 45°C erwärmt. Danach wird 3,6 g KPS zugegeben und nach 5 Minuten Zulauf 1, bestehend aus 810 g Styrol und 270 g Acrylnitril, gemeinsam mit Zulauf 2, bestehend aus 2,3 g Sulfoxylat in 100 ml Wasser, innerhalb von 3 Stunden zugetropft. 2 Std. Nachreaktionszeit.

| Versuch Nr. | FeSO₄·7 H₂O [g] | EDTA-Na [g] | Gel-Gehalt [%] | $a_{k,220/23}$ [kJ/m²] | $a_{k,250/23}$ [kJ/m²] | $a_{k,280/23}$ [kJ/m²] | $a_{k,220/0}$ [kJ/m²] | $a_{k,250/0}$ [kJ/m²] | $a_{k,280/0}$ [kJ/m²] |
|---|---|---|---|---|---|---|---|---|---|
| 1 | 0,07 | 0,45 | 98,1 | 26 | 28 | 28 | 5 | 6 | 11 |
| 2 | 0,04 | 0,25 | 98,2 | 22 | 28 | 28 | 5 | 7 | 12 |
| 3 | 0,02 | 0,13 | 98,4 | 9 | 26 | 23 | 4 | 6 | 7 |
| V-1 | − | − | 97,3 | 9 | 15 | 26 | 2 | 5 | 10 |

Der Einfluß der Menge des Komplexbildners in Relation zum Eisensalz ist gering, was folgende Tabelle zeigt (Rezeptur siehe oben). Auch bei Verwendung eines alternativen, biologisch abbaubaren Komplexbildners (Trilon® ES = Isoserindiessigsäure, ISDA) werden die guten Eigenschaften des Pfropfpolymeren erhalten.

Tabelle 4: Einfluß des Komplexbildners

| Ver-such Nr. | EDTA-Na [g] | ISDA [g] | Gel-Ge-halt [%] | $a_{k,220/23}$ [kJ/m²] | $a_{k,250/23}$ [kJ/m²] | $a_{k,280/23}$ [kJ/m²] | $a_{k,220/0}$ [kJ/m²] | $a_{k,250/0}$ [kJ/m²] | $a_{k,280/0}$ [kJ/m²] |
|---|---|---|---|---|---|---|---|---|---|
| 1 | 0,45 | – | 97,8 | 30 | 29 | 25 | 4 | 6 | 10 |
| 2 | 0,30 | – | 97,5 | 27 | 30 | 23 | 5 | 8 | 10 |
| 3 | 0,20 | – | 97,6 | 28 | 27 | 25 | 3 | 8 | 10 |
| 4 | 0,10 | – | 97,5 | 26 | 28 | 25 | 5 | 8 | 10 |
| 5 | – | 0,45 | 98,1 | 29 | 28 | 22 | 6 | 6 | 10 |
| V-2 | – | – | 96,4 | 8 | 25 | 22 | 4 | 6 | 9 |

3. Austausch von Eisen (II) gegen andere Metallionen

Tabelle 5: Einfluß des Metallsalzes

Rezeptur: 4050 g Komponente A (40 %ig = 1620 g fest), 2300 g Wasser, Metallsalz und 0,45 g EDTA-Na werden auf 45°C erwärmt. Danach wird 3,6 g KPS zugegeben und nach 5 Minuten Zulauf 1, bestehend

aus 810 g Styrol und 270 g Acrylnitril, gemeinsam mit Zulauf 2, bestehend aus 2,3 g Sulfoxylat in 100 ml Wasser, innerhalb von 3 Stunden zugetropft. 2 Std. Nachreaktionszeit.

| Ver-such Nr. | Metallsalz [g] | $a_{k,220/23}$ [kJ/m²] | $a_{k,250/23}$ [kJ/m²] | $a_{k,280/23}$ [kJ/m²] | $a_{k,220/0}$ [kJ/m²] | $a_{k,250/0}$ [kJ/m²] | $a_{k,280/0}$ [kJ/m²] |
|---|---|---|---|---|---|---|---|
| 1 | – | 13 | 8 | 7 | 2 | 2 | 2 |
| 2 | $FeSO_4$, 0,04 | 7 | 16 | 21 | 2 | 5 | 7 |
| 3 | $TiOSO_4$, 0,04 | 15 | 8 | 7 | 1 | 3 | 3 |
| 4 | $VOSO_4$, 0,04 | 10 | 8 | 7 | 1 | 2 | 2 |
| 5 | $MnSO_4$, 0,04 | 10 | 8 | 7 | 1 | 2 | 3 |
| 6 | $CoSO_4$, 0,04 | 11 | 8 | 7 | 1 | 2 | 3 |
| 7 | $CuSO_4$, 0,04 | 12 | 8 | 7 | 1 | 3 | 3 |
| 8 | $Ce(SO_4)_2$, 0,04 | 14 | 7 | 7 | 1 | 3 | 3 |

**Patentansprüche**

1. Verfahren zur Herstellung kautschukelastischer teilchenförmiger Pfropfpolymerisate durch Polymerisation eines oder mehrerer Monomerer in Gegenwart eines vorgebildeten pfropfbaren kautschukelastischen Polymeren (Pfropfgrundlage oder Pfropfkern) unter Ausbildung einer Pfropfhülle, dadurch gekennzeichnet, daß als Polymerisationsauslöser ein Redoxsystem aus Alkalipersulfat, einem zweiwertigen Eisensalz und Alkali-formaldehyd-sulfoxylat verwendet wird.